(19) Europäisches Patentamt
European Patent Office
Office européen des brevets

(11) Veröffentlichungsnummer: **0 387 631 B1**

(12) # EUROPÄISCHE PATENTSCHRIFT

(45) Veröffentlichungstag der Patentschrift: **29.06.94**

(51) Int. Cl.[5]: **C08L 83/10**, C08L 69/00

(21) Anmeldenummer: **90104076.6**

(22) Anmeldetag: **02.03.90**

Die Akte enthält technische Angaben, die nach dem Eingang der Anmeldung eingereicht wurden und die nicht in dieser Patentschrift enthalten sind.

(54) **Thermoplastische Formmassen aus Polysiloxanblockcopolycarbonaten, Polycarbonaten auf Basis von speziellen Dihydroxydiphenylcycloalkanen und gegebenenfalls Kautschuken.**

(30) Priorität: **15.03.89 DE 3908447**

(43) Veröffentlichungstag der Anmeldung:
**19.09.90 Patentblatt 90/38**

(45) Bekanntmachung des Hinweises auf die Patenterteilung:
**29.06.94 Patentblatt 94/26**

(84) Benannte Vertragsstaaten:
**DE ES FR GB IT NL**

(56) Entgegenhaltungen:
**EP-A- 0 285 984**
**US-A- 4 224 215**

**INTERNATIONAL POLYMER SCIENCE AND TECHNOLOGY Band 11, Nr. 2, 1984, SeitenT/86-T/88, Shawbury, Shrewsbury, GB; E.B. TROSTYANSKAYA et al.: "A blend ofpolycarbonate and polydimethylsiloxane, stabilised with poly-block copolymers"**

(73) Patentinhaber: **BAYER AG**

**D-51368 Leverkusen(DE)**

(72) Erfinder: **Grigo, Ulrich, Dr.**
**Michelsheide 9**
**D-4152 Kempen 3(DE)**
Erfinder: **Horlacher, Peter, Dr.**
**Ginsterweg 4**
**D-7913 Senden(DE)**
Erfinder: **Freitag, Dieter, Dr.**
**Hasenheide 10**
**D-4150 Krefeld(DE)**
Erfinder: **Idel, Karsten-Josef, Dr.**
**Am Schwarzkamp 38**
**D-4150 Krefeld(DE)**
Erfinder: **Westeppe, Uwe, Dr.**
**Vogelskamp 72**
**D-4020 Mettmann(DE)**
Erfinder: **Beer, Wolfgang, Dr.**
**Heyenfeldweg 132**
**D-4150 Krefeld(DE)**
Erfinder: **Nouvertné, Werner, Dr.**
**Burgstrasse 17b**
**D-4150 Krefeld(DE)**

EP 0 387 631 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Mischungen aus

(A) 10 bis 98 Gew.-Teilen, vorzugsweise 30 bis 90 Gew.-Teilen Polydiorganosiloxan-Polycarbonat-Blockcopolymeren mit Molekulargewichten Mw (Gewichtsmittel) von 10 000 bis 200 000 enthaltend 75 bis 97,5 Gew.-% aromatische Carbonatstruktureinheiten der Formel (1) und 25 bis 2,5 Gew.-% Aryloxyendgruppenhaltige Polydiorganosiloxan-Struktureinheiten der Formel (2)

-O-Ar-O-CO-O-Ar-O (1)

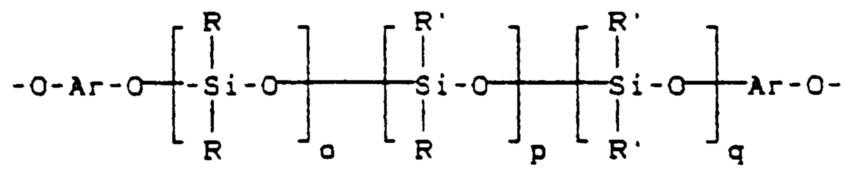
(2)

worin Ar gleiche oder verschiedene Arylenreste aus Diphenolen sind und
R und R' gleich oder verschieden sind und lineares Alkyl, verzweigtes Alkyl, Alkenyl, halogeniertes lineares Alkyl, halogeniertes verzweigtes Alkyl, Aryl oder halogeniertes Aryl bedeuten, und
die Anzahl der Diorganosiloxy-Einheiten n = o + p + q = 5 bis 200 ist,

B) 2 bis 90 Gew.-Teilen, vorzugsweise 10 bis 70 Gew.-Teilen, hochmolekulare, thermoplastische, aromatische Polycarbonate mit Molekulargewichten Mw (Gewichtsmittel) von mindestens 10 000, vorzugsweise von 10 000 bis 200 000 und insbesondere von 20 000 bis 80 000, die bifunktionelle Carbonatstruktureinheiten der Formel (Ia) enthalten

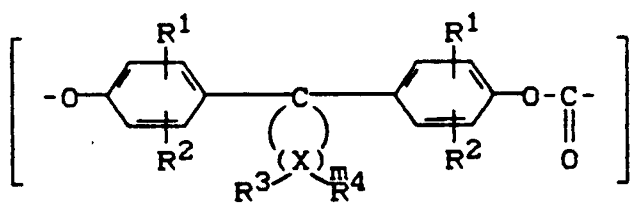
(Ia)

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff, $C_1$-$C_6$-Alkyl und

X Kohlenstoff bedeuten,

mit der Maßgabe, daß an mindestens einem Atom X $R^3$ und $R^4$ gleichzeitig Alkyl bedeuten, und

(C) 0,5 bis 30 Gew.-Teilen, vorzugsweise 1 bis 15 Gew.-Teilen eines Kautschuks, mit einer Glastemperatur Tg von weniger als -20 °C.

Aus EP-A 258 689 ist bekannt, Polycarbonaten, die Polysiloxanblöcke einpolymerisiert enthalten, kleine Mengen Polysiobutylen zuzusetzen. Damit soll die Verträglichkeit des Polyisobutylens mit dem Polycarbonat verbessert werden, so daß die durch den Polyisobutylenzusatz verbesserte Kraftstoffbeständigkeit nicht mehr durch die Gefahr der Delamination erkauft werden muß. Diese Produkte sind allerdings bezüglich Wärmeformbeständigkeit, Fließfähigkeit und des Risikos der Delamination noch weiter verbesserungsbedürftig.

A. Die Polydiorganosiloxan-Polycarbonat-Blockcopolymerisate

Diese Produkte sind grundsätzlich bekannt, z.B. aus US-A- 31 89 662 und J. Polym. Sci, Poly. Lett. Ed 12, 247 (1974).

Sie enthalten in der Polymerkette aromatische Carbonatstruktureinheiten (1) und Aryloxyendgruppen-haltige Polydiorganosiloxane (2)

-O-Ar-O-CO-O-Ar-O (1)

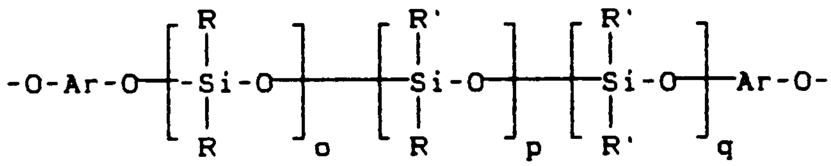

(2)

worin

Ar gleiche oder verschiedene Arylenreste aus Diphenolen sind und

R und R′ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten und die Anzahl der Diorganosiloxy-Einheiten n = o + p + q = 5 bis 200, vorzugsweise 20 bis 160, ist.

Alkyl is bevorzugt $C_1$-$C_{20}$-Alkyl; Alkenyl bevorzugt $C_2$-$C_6$-Alkenyl, Aryl $C_6$-$C_{14}$-Aryl. Halogeniert bedeutet teilweise oder vollständig chloriert, bromiert oder fluoriert. Beispiele für Alkyl, Aryl, halogeniertes Alkyl und halogeniertes Aryl sind Methyl, Ethyl, Propyl, n-Butyl, tert.-Butyl, Vinyl, Phenyl, Naphthyl, Chlormethyl, Trifluorpropyl, Perfluorbutyl, Perfluoroctyl und Chlorphenyl.

Die bevorzugten Polydiorganosiloxan-Polycarbonat-Blockcopolymere mit mittleren Molekulargewichten $\overline{Mw}$ (Gewichtsmittel, durch Ultrazentrifugation oder Streulichtmessung bestimmt) von 10 000 bis 200 000 mit einem Gehalt an aromatischen Carbonatstruktureinheiten von etwa 75 Gew.-% bis 97,5 Gew.-% und an Diorganosiloxy-Einheiten von 25 Gew.-% bis 2,5 Gew.-% können hergestellt werden, indem man α,ω-Bishydroxyaryloxy-Polydiorganosiloxane zusammen mit den Diphenolen, gegebenenfalls unter Mitverwendung von Verzweigern in den üblichen Mengen nach dem Zweiphasengrenzflächenverfahren (siehe dazu H. Schnell, Chemistry and Physics of Polycarbonates, Polymer Rev. Vol IX, Seite 27 ff., Interscience Publishers New York, 1964) polykondensiert, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert. α,ω-Bishydroxyaryloxy-Polydiorganosiloxane sind z.B. aus US-A- 3 419 634 bekannt.

Zur Herstellung der α,ω-Bishydroxyaryloxy-Polydiorganosiloxane sowie der Polydiorganosiloxan-Polycarbonat-Blockcopolymeren geeignete Diphenole sind z.B. solche der Formel (II)

HO-Ar-OH (II),

worin
Ar ein Arylenrest ist. Beispiele sind:
Hydrochinon
Resorcin
Dihydroxydiphenyle
Bis-(hydroxyphenyl)-alkane
Bis-(hydroxyphenyl)-cycloalkane außer denen der Formel (I)
Bis-(hydroxyphenyl)-sulfide
Bis-(hydrroxyphenyl)-ether
Bis-(hydroxyphenyl)-sulfoxide
Bis-(hydroxyphenyl)-sulfone und
α,ω-Bis-(hydroxyphenyl)-diisopropylbenzole
sowie deren kernalkylierte und kernhalogenierte Verbindungen. Diese und weitere geeignete aromatische Dihydroxyverbindungen sind z.B. in den US-A- 3 028 365 und 2 999 846 und in den DE-A- 2 063 050 und 2 211 957 beschrieben.

Bevorzugte Diphenole sind
2,2-Bis-(4-hydroxyphenyl)-propan
2,2-Bis-(3,5-dichlor-4-hydroxyphenyl)-propan
2,2-Bis-(3,5-dibrom-4-hydroxyphenyl)-propan

2,2-Bis-(3,5-dimethyl-4-hydroxyphenyl)-propan
Bis-(3,5-dimethyl-4-hydroxyphenyl)-methan
Bis-(4-hydroxyphenyl)-sulfid.

Die Diphenole können einzeln oder als Mischungen eingesetzt werden.

Als Verzweiger können Verbindungen mit drei- oder mehrfunktionellen Gruppen, insbesondere solche mit drei oder mehr phenolischen Hydroxylgruppen in üblichen Mengen von 0,05 bis 2 Mol-%, bezogen auf eingebaute Diphenole, verwendet werden. Die Herstellung verzweigter Polycarbonate ist beispielsweise in den DE-A- 1 570 533 und 1 595 762 sowie in US-A- 3 544 514 beschrieben.

Einige der verwendbaren Verbindungen mit drei oder mehr phenolischen Hydroxylgruppen sind beispielsweise 2,4-Bis-(4-hydroxyphenyl-isopropyl)-phenol, 2,6-Bis-(2′-hydroxy-5′-methyl-benzyl)-4-methylphenol, 2-(4-Hydroxyphenyl)-2-(2,4-dihydroxyphenyl)-propan und 1,4-Bis-(4,4′-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Als Kettenabbrecher bei der Polykondensation nach dem Zweiphasengrenzflächenverfahren sind aromatische Verbindungen mit einer funktionellen Gruppe wie aromatische Säurehalogenide oder Phenole, insbesondere die üblicherweise gebräuchlichen Phenole wie beispielsweise p-tert.-Butylphenol, p-Chlorphenol, 2,4,6-Tribromphenol und Phenol in der üblichen Menge einsetzbar, die sich nach dem jeweils einzustellenden Molekulargewicht der erfindungsgemäßen Blockcopolymeren bestimmt. Im allgemeinen werden 0,5 Mol-% bis 10,0 Mol-%, bezogen auf eingesetzte Diphenole, eingesetzt.

B. Polycarbonate B im Sinne der Erfindung

Es sind thermoplastische, aromatische Polycarbonate mit Molekulargewichten $\overline{M}w$ (Gewichtsmittel) von mindestens 10 000, vorzugsweise von 10 000 bis 200 000 und insbesondere von 20 000 bis 80 000, die bifunktionelle Carbonatstruktureinheiten der Formel (Ia) enthalten

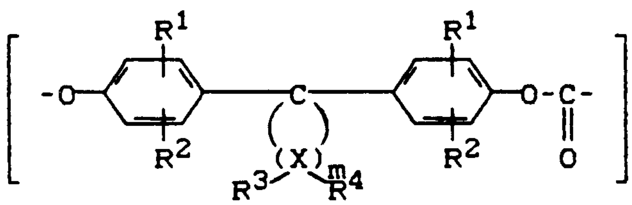
(Ia)

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | eine ganze Zahl von 4 bis 7, |
| $R^3$ und $R^4$ | für jedes X individuell wählbar, unabhängig voneinander Wasserstoff, $C_1$-$C_6$-Alkyl und |
| X | Kohlenstoff bedeuten, |
| | mit der Maßgabe, daß an mindestens einem Atom X $R^3$ und $R^4$ gleichzeitig Alkyl bedeuten. |

Bevorzugter Alkylrest ist Methyl; die X-Atome in $\alpha$-Stellung zu dem diphenylsubstituierten C-Atom (C-1) sind bevorzugt nicht mit Alkyl substituiert, dagegen ist die Alkyl-disubstitution in $\beta$-Stellung zu C-1 bevorzugt.

Diese Polycarbonate werden aus Bisphenolen der Formel (I)

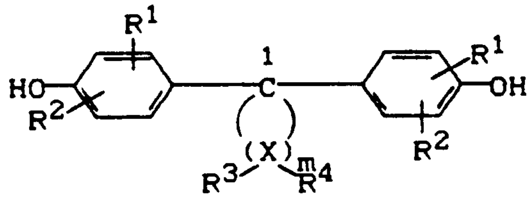

(I)

in der
$R^1$ bis $R^4$, X und m die obengenannte Bedeutung haben, gewonnen.

Insbesondere sind Diphenole der Formel (I) Dihydroxydiphenylcycloalkane mit 5 und 6 Ring-C-Atomen im cycloaliphatischen Rest (m = 4 oder 5 in Formel I), wie beispielsweise Diphenole der Formeln

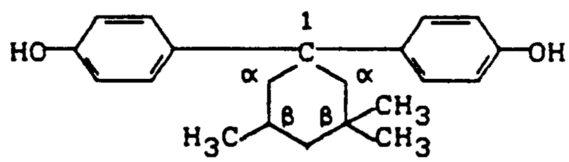

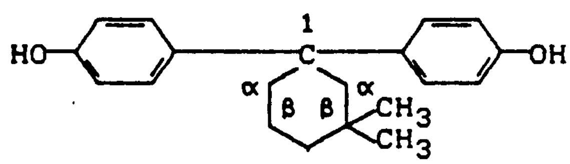

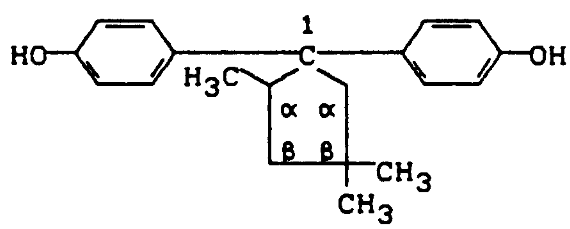

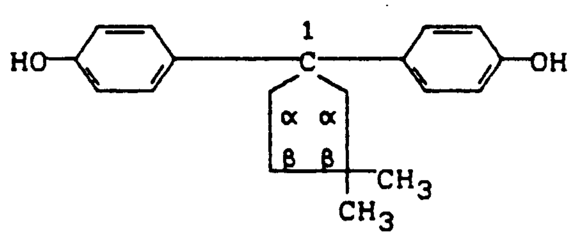

Weiter seien genannt 1,1-Bis-(4-hydroxyphenyl)-4-tert.-Butylcyclohexan und 1,1-Bis-(4-hydroxyphenyl)-3,3-dimethylcyclopentan.

Diphenole der Formel (I) können in an sich bekannter Weise durch Kondensation von Phenolen der Formel (V)

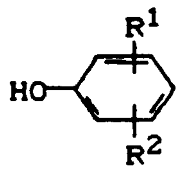

(V)

und Ketonen der Formel (VI)

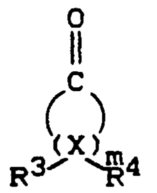

(VI)

hergestellt werden, wobei in den Formeln (V) und (VI) X, $R^1$, $R^2$, $R^3$, $R^4$ und m die für Formel (I) angegebene Bedeutung haben. Sie sind in DE-A- 38 32 396.6 beschrieben.

Daneben können auch Diphenole der Formel (II) einkondensiert sein.

Die Polycarbonate (B) können durch Zweiphasengrenzflächen-Polykondensation mit Phosgen hergestellt werden, wobei man als Kettenabbrecher Phenol und/oder Monoalkylphenole und/oder Di-alkylphenole mit insgesamt 1 bis 20 C-Atomen in den Alkylsubstituenten, vorzugsweise solche der Formel

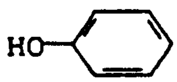

und/oder

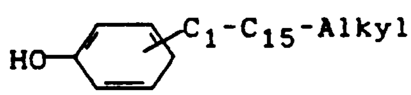

vorzugsweise in Mengen von 1,0 Mol-% bis 10 Mol-%, bezogen auf eingesetzte Diphenole, mitverwenden kann.

C. Kautschuke

Die Kautschuke C schließen Copolymerisate ein, insbesondere Pfropfcopolymerisate mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat, (Meth-)Acrylsäureester mit 1 bis 18 C-Atomen in der Alkoholkomponente und Kohlenmonoxid, also Polymerisate, wie sie z.B. in "Methoden der organischen Chemie", (Houben-Weyl), Bd. 14/1, Georg Thieme-Verlag, Stuttgart 1961, S. 393-406, und in C.B. Bucknall, "Toughened Plastics", Appl. Science Publishers, London 1977, beschrieben sind. Bevorzugte Kautschuke C besitzen einen Gelgehalt von über 20, vorzugsweise über 40 Gew.-%.

Bevorzugte Kautschuke C sind Ethylen/Vinylacetat-Copolymerisate mit 15 bis 70 Gew.-% Vinylacetat und Schmelzindices von nicht fließfähig bis 1000, vorzugsweise von 0,1 bis 20, gemessen bei 190 °C und 2,16 kp Belastung nach DIN 53 753; Terpolymerisate aus Ethylen, Acrylsäurealkylester bzw. Vinylacetat und Kohlenmonoxid; EPM- und EPDM-Kautschuke, in denen das Gewichtsverhältnis von Ethylen- zu Propylenresten 40:60 bis 90:10, vorzugsweise 40:60 bis 65:35, ist.

Die Mooney-Viskositäten (ML 1+4/100 °C gemäß DIN 53 523) der unvernetzten EPM- bzw. EPDM-Kautschuke liegen zwischen 25 und 100 ME, vorzugsweise zwischen 35 und 90 ME. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1-20 Doppelbindungen/1000 C-Atome aufweisen können. Als geeignete Dien-Monomere in EPDM seien beispielsweise genannt konjugierte Diene, z.B. Isopren und Butadien, nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien, cyclische Diene, z.B. Cyclopentadien, Cyclohexadien, Cyclooctadien und Dicyclopentadien; Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene, z.B. 3-Methyltricyclo-

(5.2.1.0.2.6)-3,8-decadien. Bevorzugt seien die nichtkonjuigerten Diene Hexadien-1,5, Ethylidennorbornen oder Dicyclopentadien angeführt. Der Diengehalt im EPDM beträgt vorzugsweise 0,5 bis 10 Gew.-%.

EPM- und EPDM-Kautschuke sind z.B. in der DE-A-2 808 709 beschrieben.

Besonders bevorzugt sind EPM- u. EPDM-Kautschuke mit aufgepfropften reaktiven Gruppen, wie z.B. MSA.

Bevorzugte Kautschuke C sind auch gegebenenfalls selektiv hydrierte lineare, regelmäßige oder radiale Teleblockcopolymerisate aus einer polymerisierten vinylaromatischen Verbindung $(X)_n$ und $(X)'_n$ und einem olefinischen Elastomeren (Y) vom $X_n$-Y-$X'_n$-; $X_n$(Y-X-Y)$_n$-X $_n$-; $X_n$(YX)$_n$Y-; Y-(X)$_s$-, (X)$_s$-Y oder Y[(XY)$_n$Y]$_s$-Typ (mit s = 3 - 5), worin n eine ganze Zahl von 1 bis 10 darstellt.

Diese Blockcopolymerisate können nach bekannten Verfahren hergestellt werden. Vor der Hydrierung umfassen die Endblöcke dieser Copolymeren Homopolymere oder Copolymere, die vorzugsweise von alkenylaromatischen Kohlenwasserstoffen und insbesondere vinylaromatischen Kohlenwasserstoffen hergestellt worden sind, worin der aromatische Anteil entweder monocyclisch oder polycyclisch ist.

Typische Monomere umfassen Styrol, $\alpha$-Methylstyrol, Vinyltoluol, Ethylvinylxylol und Vinylnaphthalin, insbesondere Styrol, oder Mischungen derselben. Die Endblöcke $(X)_n$ und $(X)'_n$ könnnen gleich oder unterschiedlich sein. Der Zentralblock (Y) kann beispielsweise von Butadien, Isopren, 1.3-Pentadien und 2.3-Dimethylbutadien abgeleitet sein und er kann eine lineare, regelmäßige oder teleradiale Struktur besitzen.

Das Verhältnis der Copolymeren und die durchschnittlichen Molekulargewichte können innerhalb weiter Grenzen variieren, obwohl das Molekulargewicht des Zentralblocks größer sein sollte als das der vereinigten Endblöcke. Bevorzugt besitzen die Endblöcke X ein durchschnittliches Molekulargewicht von 2 000 bis 100 000 und der Zentralblock Y beispielsweise ein hydrierter Polybutadienblock mit einem durchschnittlichen Molekulargewicht von 25.000 bis 1 000 000.

Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben. Derartige selektiv hydrierte Blockpolymerisate werden z.B. in der DE-A- 3 000 282 und 2 839 356 beschrieben.

Bevorzugte Kautschuke C sind auch mit Styrol, Acrylnitril, Acrylsäureestern, Methacrylsäureestern oder Mischungen daraus bepfropfte Polybutadiene, Butadien/Styrol-Copolymerisate und Poly(meth)-acrylsäureester, z.B. Copolymerisate aus Styrol oder Alkylstyrol und konjugierten Dienen (schlagfestes Polystyrol), d.h. Copolymerisate der in der DE-A- 1 694 173 (= US-A- 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-A- 2 348 377 (= US-A- 3 919 353) beschrieben sind.

Besonders bevorzugte Kautschuke C sind Pfropfprodukte, die durch Polymerisation von

10 bis 40, vorzugsweise 10 bis 35, insbesondere 10 bis 25 Gew.-%, bezogen auf Pfropfprodukt,

eines Acrylsäureesters oder Methacrylsäureesters oder

eines Gemisches aus 10 bis 35, vorzugsweise 20 bis 35 Gew.-%, bezogen auf Gemisch, Acrylnitril und 65 bis 90,

vorzugsweise 65 bis 80 Gew.-%, bezogen auf Gemisch, Styrol (Pfropfauflage) in Gegenwart von

60 bis 90, vorzugsweise 65 bis 90, insbesondere 75 bis 85 Gew.-%, bezogen auf Pfropfprodukt, eines Butadien-Polymerisats mit mindestens 70 Gew.-%, bezogen auf Butadien-Polymerisat-Butadienresten (Pfropfgrundlage)

erhältlich sind, wobei vorzugsweise der Gelanteil der Pfropfgrundlage $\geq$ 70 % (in Toluol gemessen), der Pfropfgrad g 0,15 bis 0,55 und der mittlere Teilchendurchmesser $d_{50}$ des Pfropfpolymerisats 0,2 bis 0,6, vorzugsweise 0,3 bis 0,5 $\mu$m betragen.

Geeignete Acrylsäureester und Methacrylsäureester sind $C_1$-$C_{18}$-Alkylester.

Die Pfropfgrundlage kann neben Butadienresten bis zu 30 Gew.-% Reste anderer ethylenisch ungesättigter Monomerer wie Styrol, Acrylnitril, $C_1$-$C_{18}$-Alkyl, Ester der Acryl- oder Methacrylsäure (wie Methylacrylat, Ethylacrylat, Methylmethacrylat, Ethylmethacrylat), enthalten. Die bevorzugte Pfropfgrundlage ist Polybutadien.

Da bei der Pfropfpolymerisation die Monomeren nicht vollständig auf die Pfropfgrundlage aufpfropfen, enthalten die Pfropfprodukte neben den eigentlichen Pfropfpolymerisaten auch Homo- und Copolymerisate der eingesetzten Pfropfmonomeren.

Der mittlere Teilchendurchmesser $d_{50}$ ist der Durchmesser, oberhalb und unterhalb dessen jeweils 50 Gew.-% der Teilchen liegen. Er kann bestimmt werden mit der Ultrazentrifuge (Kolloid Z. und Z. Polymere 250 (1972), 782 bis 796) oder durch Auszählen der Teilchen in einer elektronenmikroskopischen Aufnahme (Angew. Makromolekulare Chemie 14, (1970), 111 bis 129) oder aus der Lichtstreuung.

Besonders bevorzugte Kautschuke C sind Pfropfprodukte aus
25 bis 98 Gew.-%, bezogen auf C, Acrylatkautschuk mit einer Glasübergangstemperatur unter -20 °C als Pfropfgrundlage und
2 bis 75 Gew.-%, bezogen auf C eines polymerisierbaren ethylenisch ungesättigten Monomeren, oder eines Gemischs solcher Monomeren des Homo- bzw. Copolymerisats mit einer Glasübergangstemperatur über 25 °C bildet, als Pfropfauflage.

Als Pfropfgrundlage geeignete Acrylatkautschuke sind vorzugsweise Polymerisate von Acrylsäurealkylestern, gegebenenfalls mit bis zu 40 Gew.-% anderen polymerisierbaren ethylenisch ungesättigten Monomeren. Sofern diese Acrylatkautschuke - wie unten beschrieben - ihrerseits bereits Pfropfprodukte mit einem Dienkautschukkern sind, wird bei der Berechnung ihrer Menge der Dienkautschukkern nicht mitgezählt. Zu den bevorzugten Acrylsäureestern gehören $C_1$-$C_8$-Alkylester, beispielsweise Methyl-, Ethyl-, Butyl-, Octyl- und 2-Ethyl-hexylester, Halogenalkylester, vorzugsweise Halogen-$C_1$-$C_8$-alkylester, wie Chlorethylacrylat, und aromatische Ester wie Benzylacrylat und Phenethylacrylat. Sie können einzeln oder in Mischung eingesetzt werden.

Die Acrylatkautschuke können unvernetzt oder vernetzt, vorzugsweise partiell vernetzt, sein.

Zur Vernetzung können Monomere mit mehr als einer polymerisierbaren Doppelbindung copolymerisiert werden. Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, z.B. Ethylenglykoldimethylacrylat, Allylmethacrylat; mehrfach ungesättigte heterocyclische Verbindungen, z.B. Trivinyl- und Triallylcyanurat und -isocyanurat, Tris-acryloyl-s-triazine, insbesondere Triallylcyanurat; polyfunktionelle Vinylverbindungen, wie Di- und Trivinylbenzol; sowie Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Acrylatkautschuk.

Von cyclischen vernetzenden Monomeren mit mindestens 3 ethylenisch ungesättigten Gruppen werden bevorzugt nicht mehr als 1 Gew.-% bezogen auf Acrylatkautschuk verwendet.

Bevorzugte polymerisierbare ethylenisch ungesättigte Monomere, die neben den Acrylsäureestern zur Herstellung der Acrylatkautschuke verwendet werden können, sind z.B. Acrylnitril, Styrol, $\alpha$-Methylstyrol, Acrylamide, Vinyl-$C_1$-$C_6$-alkylether, Butadien, Isopren.

Bevorzugte Acrylatkautschuke sind Emulsionspolymerisate, die einen Gelgehalt von 60 Gew.-% aufweisen (gemessen bei 25 °C in Dimethylformamid).

Acrylatkautschuke können auch Kern/Mantel-Struktur haben, d.h. einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Gewichtsanteil dieses Polydien-Kerns am Acrylatkautschuk kann 0,1 bis 80, bevorzugt 10 bis 50 Gew.-%, betragen. Mantel und Kern können unabhängig voneinander unvernetzt, teilvernetzt oder hochvernetzt sein.

Die Pfropfausbeute, d.h. der Quotient aus der Menge des pfropfpolymerisierten Monomeren und der Menge des eingesetzten Monomeren beträgt in der Regel 0,2 bis 0,8.

Bevorzugte Pfropfmonomere sind $\alpha$-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gewichtsverhältnis 90:10 bis 50:50.

Pfropfprodukte C auf Basis von Polyacrylsäureestern werden z.B. in der DE-A- 2 444 584 und in der DE-A- 2 726 256 beschrieben.

Besonders vorteilhafte Pfropfprodukte dieser Art erhält man, wenn man 2 bis 20, vorzugsweise 2 bis 15 Gew.-%, bezogen auf C, Monomer auf 80 bis 98, vorzugsweise 85 bis 97 Gew.-%, bezogen auf C, des vollständig gebrochenen und in Wasser aufgeschlämmten Kautschuk-Latex in Abwesenheit von Suspendiermittel aufpfropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von Komponente C in der erfindungsgemäßen Mischung 0,05 bis 3, vorzugsweise 0,1 bis 2, insbesondere 0,2 bis 1 $\mu$m beträgt.

Der Begriff "in Abwesenheit von Suspendiermittel" bedeutet die Abwesenheit von Stoffen, die nach Art und Menge die Pfropfmonomeren in der wäßrigen Phase suspendieren könnten. Die Definition schließt die Anwesenheit von Stoffen nicht aus, die z.B. bei der Herstellung einer gepfropften Pfropfgrundlage suspendierend gewirkt haben, in derartigen Fällen muß das Koagulations- oder Fällungsmittel, das zum Brechen des Kautschuk-Latex eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren in der wäßrigen Phase keine (stabile) Emulsion oder Dispersion ergeben.

Ein derart in Abwesenheit von Suspendiermittel hergestelltes Pfropfprodukt C ist in den erfindungsgemäßen Formmassen mit einer außergewöhnlich niedrigen Teilchengröße verteilbar, die relativ unverändert auch längere Verarbeitungszeiten bei höherer Temperatur übersteht.

Als Pfropfgrundlage können auch als Latex vorliegende Acrylatkautschuke verwendet werden, auf deren Latexpartikel 1 bis 20 Gew.-%, vorzugsweise 1 bis 10 Gew.-%, solcher Monomerer bereits in der wäßrigen Emulsion pfropfpolymerisiert sind, deren Homo- bzw. Copolymerisate Glastemperaturen >0 °C aufweisen.

Bevorzugte Monomere sind Alkylacrylate, Alkylmethacrylate, Styrol, Acrylnitril, α-Methylstyrol und/oder Vinylacetat.

Solche Pfropfgrundlagen kann man auch herstellen, indem man einen Acrylatkautschuk durch Lösungs- oder Masse-Polymerisation herstellt, dann die Monomeren pfropfpolymerisiert und anschließend den Kautschuk in eine wäßrige Emulsion überführt.

Als Pfropfgrundlagen eignen sich auch in wäßriger Emulsion hergestellte Pfropfpolymerisate mit solchen Acrylsäureesterpolymerisaten oder -copolymerisaten als Basis, die einen Dienkautschukkern enthalten.

Zur weiteren Erhöhung der Benzinbeständigkeit der erfindungsgemäßen Mischungen können zusätzlich bis zu 5 Gew.-%, bezogen auf Mischung Ethylenhomo- bzw. -copolymerisate zugesetzt werden. Geeignete Ethylencopolymerisate sind Polyethylene, die neben Ethylenresten bis zu 30 Gew.-%, bezogen jeweils auf Ethylencopolymerisat, Reste anderer copolymerisierbarer Monomerer, wie Acrylsäure oder Methacrylsäure enthalten.

Die erfindungsgemäßen Mischungen können die für Polycarbonate und für Kautschuke üblichen Additive, wie Gleit- und Entformungsmittel, Nukleiermittel, Stabilisatoren, Füll- und Verstärkungsstoffe, Flammschutzmittel sowie Farbstoffe enthalten.

Die gefüllten bzw. verstärkten erfindungsgemäßen Mischungen können bis zu 30 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titanoxid, Wollastonit.

Die mit Flammschutzmitteln ausgerüsteten erfindungsgemäßen Mischungen können Flammschutzmittel in einer Menge von bis zu 30 Gew.-%, bezogen auf die flammgeschützten Formmassen enthalten. Es kommen alle für Polycarbonate bekannten Flammschutzmittel in Frage.

Die erfindungsgemäßen Mischungen können in den üblichen Mischaggregaten wie Walzen, Knetern, Ein- und Mehrwellenextrudern, hergestellt werden. In den meisten Fällen werden A, B und C in einem Schritt gemischt. Es kann manchmal auch empfehlenswert sein, zuerst eine Komponente wegzulassen und erst zu einem späteren Zeitpunkt zuzumischen.

Die erfindungsgemäßen Formmassen besitzen besonders gute Zähigkeit bei tiefen Temperaturen und liefern Spritzgußformkörper mit ausgezeichneten Oberflächen.

## Beispiele

Für die aufgeführten Beispiele wurden folgende Polymerisate verwendet:

A Ein Copolycarbonat auf Basis von Bisphenol A und 6.7 Gew.-% Polydimethylsiloxan der Blocklänge $(P_n)$80, mit einer relativen Lösungsviskosität von 1.26 (gemessen in Methylenchlorid bei 25 °C).

Im Beispiel 4 (Vergleich) wurde ein Copolycarbonat auf Basis von Bisphenol A und 5.3 Gew.-% Polydimethylsiloxan der Blocklänge $(P_n)$80, mit einer relativen Lösungsviskosität von 1.28 (gemessen in Methylenchlorid bei 25 °C) eingesetzt.

B Ein Copolycarbonat auf Basis von 2.2-(4-hydroxyphenyl)-propan und 1,1-Bis(4-hydroxyphenyl)-3,3,5-trimethylcyclohexan in den Molverhältnissen 45:55 (Bsp. 1), 65:35 (Bsp. 2, 5-9) und 80:20 (Bsp.3) und einer relativen Lösungsviskosität von 1.31, 1.31 und 1.30 (gemessen in Methylenchlorid bei 25 °C).

C Ein kautschukelastisches Polymerisat auf Basis von hydrierten SEBS dder Fa. Shell (Kraton G 1651) (Bsp. 1-4). In den Beispielen 5-8 wurden modifizierte EPDM-Kautschuke der Fa. Exxon eingesetzt (Exxelor VA 1803 Bsp. 5,6; Exxelor VA 0043 Bsp. 7,8). Im Beispiel 9 wurde ein Pfropfpolymerisat aus 80 Gew.-% Pfropfgrundlage aus vernetztem Polybutadien (Gelgehalt über 70 Gew.-%, gemessen in Toluol) und 20 Gew.-% Pfropfauflage aus Methylmethacrylat, wobei der mittlere Teilchendurchmesser der in Latexform vorliegenden Pfropfgrundlage zwischen 0.3 un 0.4 µm liegt, eingesetzt.

Die Mischungen werden in einem geeigneten Aggregat hergestellt und auf einer Spritzgußmaschine verarbeitet.

Die Kerbschlagzähigkeit wurde in Anlehnung an ISO 180-1A an Flachstäben (80 mm x 10 mm x 4 mm) bestimmt; die Wärmeformbeständigkeit nach Methode Vicat (B) gemäß DIN 53 460/ISO 360.

Tabelle 1

| Zusammensetzung | Dimension | Beispiel 1 | Beispiel 2 | Beispiel 3 | Beispiel 4 (Vergleich) |
|---|---|---|---|---|---|
| Komponente A | % | 78 | 66,6 | 43 | 98 |
| Komponente B | % | 20 | 31,4 | 55 | |
| Komponente C | % | 2 | 2 | 2 | 2 |
| Kerbschlagzähigkeit | | | | | |
| bei 23°C | kJ/m² | 61,9 | 63,0 | 67,0 | 83 |
| bei -20°C | kJ/m² | 52,8 | 52,8 | 53,0 | - |
| bei -30°C | kJ/m² | - | 50,5 | 39,1 | - |
| bei -40°C | kJ/m² | 42,9 | 4 x 42,5<br>6 x 35,6 | 30,3 | 71 |
| bei -50°C | kJ/m² | 30,2 | 29,8 | - | 6 x 71<br>4 x 52 |
| bei -60°C | kJ/m² | 25,9 | - | - | 44 |
| Vicat (B) | °C | 159 | 163 | 163 | 145 |
| Schmelzviskosität 300°C | | | | | |
| bei 100 $s^{-1}$ | Pa.s | 685 | 726 | 735 | 740 |
| bei 1000 $s^{-1}$ | Pa.s | 332 | 344 | 376 | 383 |
| bei 1500 $s^{-1}$ | Pa.s | 260 | 265 | 272 | 274 |

**Tabelle 2**

| Zusammensetzung | Dimension | Beispiel 5 | Beispiel 6 | Beispiel 7 | Beispiel 8 | Beispiel 9 |
|---|---|---|---|---|---|---|
| Komponente A | % | 70 | 68 | 70 | 68 | 67 |
| Komponente B | % | 28 | 38 | 28 | 28 | 28 |
| Komponente C | % | 2 | 4 | 2 | 4 | 5 |
| Kerbschlagzähigkeit | | | | | | |
| bei 23°C | $kJ/m^2$ | 63,5 | 61,9 | 61,6 | 61,9 | 59,4 |
| bei -20°C | $kJ/m^2$ | 52,2 | 55,3 | 51,8 | 57,1 | 49,5 |
| bei -30°C | $kJ/m^2$ | - | | - | - | - |
| bei -40°C | $kJ/m^2$ | 8x45,8<br>2x35,9 | 52,4 | 47,0 | 55,3 | 46,2 |
| bei -50°C | $kJ/m^2$ | 29,3 | 33,0 | 34,2 | 3x43,0<br>7x36,8 | 39,3 |
| bei -60°C | $kJ/m^2$ | 22,2 | - | 24,9 | 35,5 | |
| Vicat (B) | °C | 155,5 | 156 | 156 | 155 | 154,5 |
| Schmelzviskosität 270°C | | | | | | |
| bei 100 $s^{-1}$ | Pa.s | - | 1573,2 | 1845,3 | 1519,1 | 2225,4 |
| bei 1000 $s^{-1}$ | Pa.s | - | 594,0 | 693,3 | 508,3 | 768,9 |
| bei 1500 $s^{-1}$ | Pa.s | - | 463,3 | 527,3 | 437,0 | - |

## Patentansprüche

**1.** Mischungen aus

(A) 10 bis 98 Gew.-Teilen Polydiorganosiloxan-Polycarbonat-Blockcopolymeren mit Molekulargewichten Mw (Gewichtsmittel) von 10 000 bis 200 000 enthaltend 75 bis 97,5 Gew.-% aromatische Carbonatstruktureinheiten der Formel (1) und 25 bis 2,5 Gew.-% Aryloxyendgruppenhaltige Polydiorganosiloxan-Struktureinheiten der Formel (2)

-O-Ar-O-CO-O-Ar-O (1)

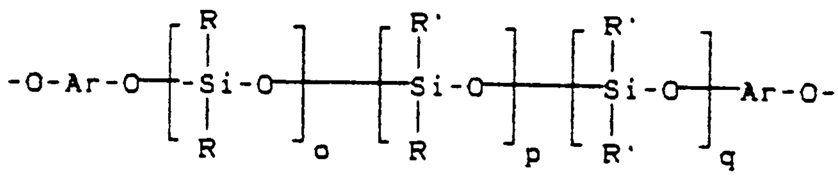
(2)

worin Ar gleiche oder verschiedene Arylenreste aus Diphenolen sind und
R und R' gleich oder verschieden sind und lineares Alkyl, verzweigtes Alkyl, Alkenyl, halogeniertes lineares Alkyl, halogeniertes verzweigtes Alkyl, Aryl oder halogeniertes Aryl bedeuten, und
die Anzahl der Diorganosiloxy-Einheiten n = o + p + q = 5 bis 200 ist,
(B) 2 bis 90 Gew.-Teilen hochmolekulare, thermoplastische, aromatische Polycarbonate mit Molekulargewichten Mw (Gewichtsmittel) von mindestens 10 000,
die bifunktionelle Carbonatstruktureinheiten der Formel (Ia) enthalten

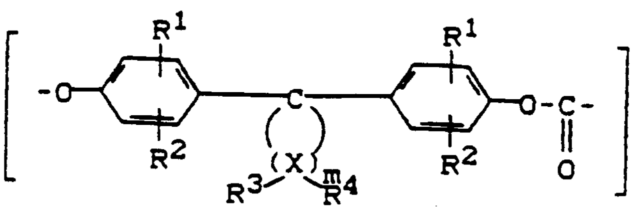
(Ia)

worin
$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,
m eine ganze Zahl von 4 bis 7,
$R^3$ und $R^4$ für jedes X individuell wählbar, unabhängig voneinander Wasserstoff, $C_1$-$C_6$-Alkyl und
X Kohlenstoff bedeuten,
mit der Maßgabe, daß an mindestens einem Atom X $R^3$ und $R^4$ gleichzeitig Alkyl bedeuten, und
(C) 0,5 bis 30 Gew.-Teilen eines Kautschuks.

**2.** Mischungen gemäß Anspruch 1, dadurch gekennzeichnet, daß R und R' Methyl bedeuten.

**3.** Mischungen gemäß Anspruch 1 oder 2, dadurch gekennzeichnet, daß n 20 bis 160 ist.

## Claims

**1.** Mixtures of
(A) 10 to 98 parts by weight of polydiorganosiloxane polycarbonate block copolymers with molecular weights Mw (weight average) of 10,000 to 200,000 containing 75 to 97.5% by weight of aromatic carbonate structural units corresponding to formula (I) and 25 to 2.5% by weight of aryloxyterminated polydiorganosiloxane structural units corresponding to formula (2):

-O-Ar-O-CO-O-Ar-O (1)

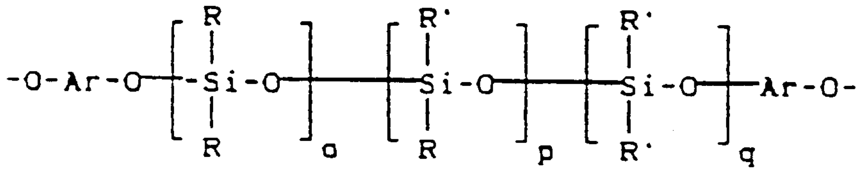

(2)

in which the Ar 's may be the same or different and represent various arylene radicals of diphenols and

the R 's and R' 's may be the same or different and represent linear alkyl, branched alkyl, alkenyl, halogenated linear alkyl, halogenated branched alkyl, aryl or halogenated aryl and

the number of diorganosiloxy units n = o + p + q = 5 to 200

(B) 2 to 90 parts by weight of high molecular weight, thermoplastic aromatic polycarbonates with molecular weights Mw (weight average) of at least 10,000 which contain bifunctional carbonate structural units corresponding to formula (Ia):

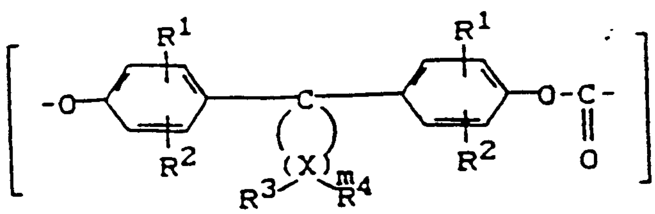

(Ia)

in which

$R^1$ and $R^2$ independently of one another represent hydrogen, halogen, $C_{1-8}$ alkyl, $C_{5-6}$ cycloalkyl, $C_{6-10}$ aryl and $C_{7-12}$ aralkyl,

m is an integer of 4 to 7,

$R^3$ and $R^4$ may be individually selected for each X and independently of one another represent hydrogen, $C_{1-6}$ alkyl and

the X 's represent carbon, with the proviso that, at at least one atom X, $R^3$ and $R^4$ are both alkyl and

(C) 0.5 to 30 parts by weight of a rubber.

**2.** Mixtures as claimed in claim 1, characterized in that R and R' represent methyl.

**3.** Mixtures as claimed in claim 1 or 2, characterized in that n is 20 to 160.

## Revendications

**1.** Mélanges composés

(A) de 10 à 98 parties en poids de copolymères séquencés polydiorganosiloxane-polycarbonate ayant des poids moléculaires $M_p$ (moyenne pondérale) de 10 000 à 200 000, contenant 75 à 97,5 % en poids de motifs structuraux carbonate aromatiques de formule (1) et 25 à 2,5 % en poids de motifs structuraux polydiorganosiloxane contenant des groupes aryloxy terminaux, de formule (2)

-O-Ar-O-CO-O-Ar-O (1)

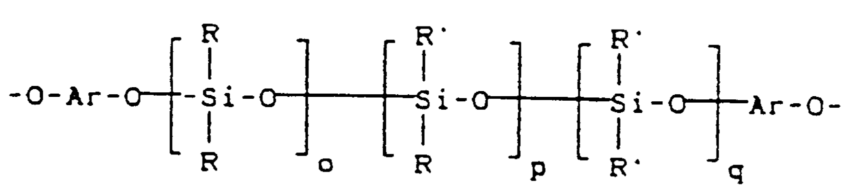

(2)

où Ar représente des restes arylène égaux ou différents dérivés de diphénols et

R et R' sont égaux ou différents et représentent un groupe alkyle linéaire, un groupe alkyle ramifié, un groupe alcényle, un groupe alkyle linéaire halogéné, un groupe alkyle ramifié halogéné, un groupe aryle ou un groupe aryle halogéné, et

le nombre n = o + p + q de motifs di organosiloxy à une valeur de 5 à 200,

(B) de 2 à 90 parties en poids de polycarbonates aromatiques thermoplastiques de haut poids moléculaire, ayant des poids moléculaires $M_p$ (moyenne pondérale) d'au moins 10 000,

qui contiennent des motifs structuraux carbonate difonctionnels de formule (Ia)

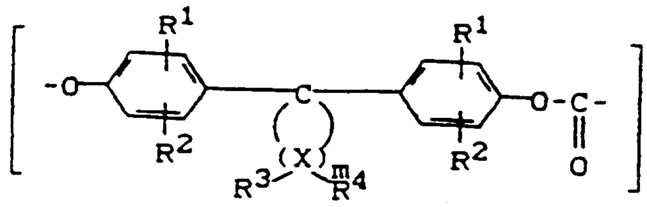

(Ia)

dans laquelle

$R^1$ et $R^2$ représentent, indépendamment l'un de l'autre, de l'hydrogène, un halogène, un groupe alkyle en $C_1$ à $C_8$, cycloalkyle en $C_5$ ou $C_6$, aryle en $C_6$ à $C_{10}$ et aralkyle en $C_7$ à $C_{12}$,

m est un nombre entier de 4 à 7,

$R^3$ et $R^4$, pouvant être choisis individuellement pour chaque X, représentent indépendamment l'un de l'autre de l'hydrogène, un groupe alkyle en $C_1$ à $C_6$ et X est du carbone,

sous réserve que sur au moins un atome X, $R^1$ et $R^4$ représentent simultanément un groupe alkyle, et

(C) de 0,5 à 30 parties en poids d'un caoutchouc.

**2.** Mélanges suivant la revendication 1, caractérisés en ce que R et R' sont des groupes méthyle.

**3.** Mélanges suivant la revendication 1 ou 2, caractérisés en ce que n a une valeur de 20 à 160.